# EUROPEAN PATENT APPLICATION

(11) **EP 4 556 521 A1**
(43) Date of publication of application: **21.05.2025**
(21) Application number: 24189679.4
(22) Date of filing: 19.07.2024
(51) Int. Cl.: C08K 5/19, C08K 5/50, C08L 83/04

(54) **REPROCESSABLE POLYMER COMPOSITION WITH DYNAMIC CROSSLINKS**

(30) Priority: 21.07.2023 US 202363514804 P
(71) Applicant: Nano and Advanced Materials Institute Limited, Shatin, New Territories (HK)
(72) Inventor: O, Wing Nien Wylie, Hong Kong (HK); LEUNG, Chi Yin, Hong Kong (HK); LO, Siu Kit, Hong Kong (HK)
(74) Representative: Dr. Gassner & Partner mbB

(57) **Abstract**

Polysiloxane-based polymers with reversible crosslinks are provided using at least one dynamic bond activator promoting Si-O bonds between adjacent silicon-oxygen backbone chain elastomers within the polymer network. The polymers are able to undergo reversible crosslinking and de-crosslinking processes, allowing for reprocessing. The polymer composition is formed from a silicon-oxygen backbone chain elastomer that creates a polymer network. A non-agglomerating filler is dispersed within and bonded to the polymer network. A catalyst facilitates a condensation reaction. A crosslinker may be one or more silanes that include one or more methoxy or ethoxy groups. At least one dynamic bond activator promotes Si-O bonds exchange between adjacent silicon-oxygen backbone chain elastomers of the polymer network. In bulk form, the polymer composition has properties of a thermosetting polymer at ambient conditions and is capable of reshaping as a viscoelastic liquid at a temperature of greater than approximately 170° C.

## Description

### Cross-reference to Related Application:

The present application claims priority from U.S. provisional patent application serial number 63/514,804 filed July 21th, 2023, and the disclosures of which are incorporated by reference in their entireties.

### Field of the Invention:

The invention relates polymer compositions having covalent bonding networks alterable by thermally-activated bond exchanges creating dynamic crosslinks. The polymer compositions are capable of being reprocessed since they can be reshaped by reheating.

### Background:

Silicones represent a large portion of the polymer market. The annual production volume is approximately 370K tons in China, with a compound annual growth rate (CAGR) of 6.1% from 2019 to 2025 for the global market, and is expected to reach USD 2.01 billion by 2025. Silicone rubber is widely used in general consumer goods items and food contact articles owing to its high tensile strength, thermal stability, and food contact safety, in comparison to elastomers such as thermoplastic polyurethane (TPU).

With this large production volume, substantial amounts of silicone scrap and waste are generated from manufacturing or from end-users. This negatively impacts both production costs and the environment, as commercial silicones are not reprocessable due to their thermosetting nature. The current scrap rate from demolding at manufacturing reach up to 5%, which contributes to a loss of RMB 4 to 11 million per year. While the current recycling cost of silicone is at RMB 4 to 7/kg, development of a silicone-like material that is reprocessable would represent both a production cost saving solution while providing a sustainable solution as recycling equipment and resources can be saved.

Conventional methods to reprocess silicone scrap and waste involve either physical or chemical degradation, or sometimes combination of the two. These include:
1) Mechanically grinding to fillers as reinforcing materials in composites;
2) Down-cycling to industrial lubricant, such as those methods developed by Dow Corning (WO2014130948A1) via depolymerization of polydimethylsiloxane (PDMS)
3) Hydrothermal methods to re-form silicone rubber with significantly poor mechanical properties

These low-value-added processes impose extra costs and time to production, and are not sustainable, and do not take advantages of the strength of silicone rubber for high-value-added applications.

There are "thermoplastic silicone-elastomers" that are commercially available, for example, thermoplastic silicone vulcanizate, TPSiV, sold by DuPont. This product is formed by dispersing a crosslinked silicone rubber (vulcanized silicone modules comprising PDMS) into a thermoplastic continuous phase of thermoplastic polyurethane, TPU, with a platinum hydrosilyation catalyst in situ. The composite material is said to be reprocessable through melting and remolding. The silicone content is below 50% w/w in most cases, and the fabrication process requires water-free conditions to obtain TPSiV of good quality with high tensile strength. In addition, TPSiV cannot be used in food contact applications due to amines or amides that might reside in the composite from TPU.

There is a need for a new class of polymer elastomers using silicon-oxygen backbones that can be reprocessable thermally at temperatures beyond the required scope of applications, while maintaining the advantages of commercial silicones with high tensile strength, thermal stability, and food contact safe for high-value-added applications. The present invention addresses this need.

### SUMMARY OF THE INVENTION:

The present invention provides a new polymer system based on silicon-oxygen backbone elastomers that promote change in the material's topology by thermally activated bond-exchange reaction: at their reprocessable temperature, the inventive polymer system flows as a viscoelastic liquid, while at low temperatures the bond-exchange reactions are immeasurably slow, and thus the inventive polymer system behaves as a thermosetting elastomer.

In order to achieve materials properties similar to commercial silicone rubber, i.e. high tensile strength, thermal stability, and food contact safety, the present invention involves: 1) the selection of different chain lengths and branching of PDMS polymers for the inventive polymer network enabling tuning to high tensile strength; 2) the development and choice of new crosslinkers for the PDMS-based polymer network permitting selection of optimal reprocessing temperatures; and 3) the use of high silicon-oxygen polymer content and moving away from the use of TPU in formulation guarantees food contact compliance.

The present invention provides polysiloxane-based polymers with reversible crosslinks, using at least one dynamic bond activator promoting Si-O bonds between adjacent silicon-oxygen backbone chain elastomers within the polymer network. These polymers are designed to have the ability to undergo reversible crosslinking and de-crosslinking processes, allowing for reprocessing.

In one aspect, the present invention provides a polymer composition having covalent bonding networks alterable by thermally-activated bond exchanges that create dynamic crosslinks. The polymer composition is formed from a silicon-oxygen backbone chain elastomer that creates a polymer network. A non-agglomerating filler is dispersed within and bonded to the polymer network. A catalyst facilitates a condensation reaction. A crosslinker is used for crosslinking and may be one or more silanes that include one or more methoxy or ethoxy groups.

At least one dynamic bond activator promotes Si-O bonds between adjacent silicon-oxygen backbone chain elastomers of the polymer network such that dynamic crosslinks formed between the adjacent silicon-oxygen backbone chain elastomers create a three-dimensional crosslinked polymer network.

In bulk form, the polymer composition has properties of a thermosetting polymer at ambient conditions and is capable of reshaping as a viscoelastic liquid at a temperature of greater than approximately 170° C. In some embodiments, a tensile strength of at least 60% of ambient tensile strength and at least 70% of ambient elongation at break is retained.

In one aspect, the silicon-oxygen backbone chain elastomer is selected from one or more of a trimethylsilyl-terminated polydimethyl siloxane and a silanol-terminated polydimethyl siloxane.

In one aspect, the silicon-oxygen backbone chain elastomer has a molecular weight of 5,970 to 139,000 g/mol and a viscosity of 100 to 150,000 cSt and is present in the composition in an amount from 49.6 to 65.6 wt%.

In one aspect, the filler comprises fumed silica, calcium carbonate or zinc oxide, in an amount of 24.9 to 36.9 wt%.

In one aspect, the at least one dynamic bond activator is an ionic salt selected from an ammonium salt or a phosphonium salt in an amount of 0.09 to 2.5 wt%.

In one aspect, the dynamic bond activator is tetrabutylphosphonium hydroxide.

In one aspect, the at least one catalyst comprises dibutyltin dilaurate or dibutyltin dioctoate in an amount of 0.12 to 2.3 wt%.

In one aspect, the crosslinker is a silane with ethoxy groups or a silane with methoxy groups, in an amount of 2.7 to 25.0 wt%.

In one aspect, the crosslinker is selected from one or more of 1,2-bis (triethoxysilyl) ethane, poly(dimethoxysiloxane), poly(diethoxysiloxane), and tetraethyl silicate.

The present invention further provides a method for preparing the polymer composition in which a first silicon-oxygen backbone chain elastomer is combined with filler and crosslinker to form a first mixture. A second silicon-oxygen backbone chain elastomer is combined with filler and catalyst to form a second mixture. The first mixture and the second mixture are combined to form a third mixture, wherein the first mixture and the second mixture are combine in a weight ratio of 1.1: 1 to 8.3:1. The third mixture is combined with at least one dynamic bond activator to form a fourth mixture which is cured to form the polymer composition. Solvent can be removed through an optional heating step in vacuum at a temperature of 50 to 80°C.

### Brief Description of the Drawings:

FIG. 1 schematically depicts a mechanism of polymer reprocessability.
FIG. 2 depicts reactions involved in the formation of the polymer composition of the present invention.

### Detailed Description:

Silicon-oxygen backbone chain elastomers, such as polysiloxanes, have repeating units of siloxane (-Si-O-) linkages. These polymers possess excellent thermal stability, chemical resistance, and flexibility, making them useful for numerous applications. By incorporating Si-O bonds between adjacent backbone chains, various mechanical properties can be enhanced without sacrificing the ability to re-mold and reprocess the polymers.

The reprocessability of these polymers is particularly valuable in reducing waste and promoting sustainability. By breaking and reforming the crosslinks, the material can be repeatedly processed, molded, and reshaped without any significant degradation in its properties. This reprocessability opens up possibilities for efficient material reuse and reduces the need for producing new polymers.

The polymer composition is formed from a silicon-oxygen backbone chain elastomer that creates a polymer network. In one aspect, the silicon-oxygen backbone chain elastomer has a molecular weight of 5,970 to 139,000 g/mol and a viscosity of 100 to 150,000 cSt and is present in the composition in an amount from 49.6 to 65.6 wt%. In particular, these may be one or more of a trimethylsilyl-terminated polydimethyl siloxane (PDMS) and a silanol-terminated polydimethyl siloxane (PDMS).

A non-agglomerating filler is dispersed within and bonded to the polymer network. In one aspect, the filler comprises fumed silica, calcium carbonate or zinc oxide, in an amount of 24.9 to 36.9 wt%.

A catalyst facilitates a condensation reaction such as dibutyltin dilaurate or dibutyltin dioctoate in an amount of 0.12 to 2.3 wt%. A crosslinker is used for crosslinking and may be one or more silanes that include one or more methoxy or ethoxy groups. In one aspect, the crosslinker is a silane with ethoxy groups or a silane with methoxy groups, in an amount of 2.7 to 25.0 wt%. Examples of suitable crosslinkers include one or more of 1,2-bis(triethoxysilyl) ethane, poly(dimethoxysiloxane), poly(diethoxysiloxane), and tetraethyl silicate.

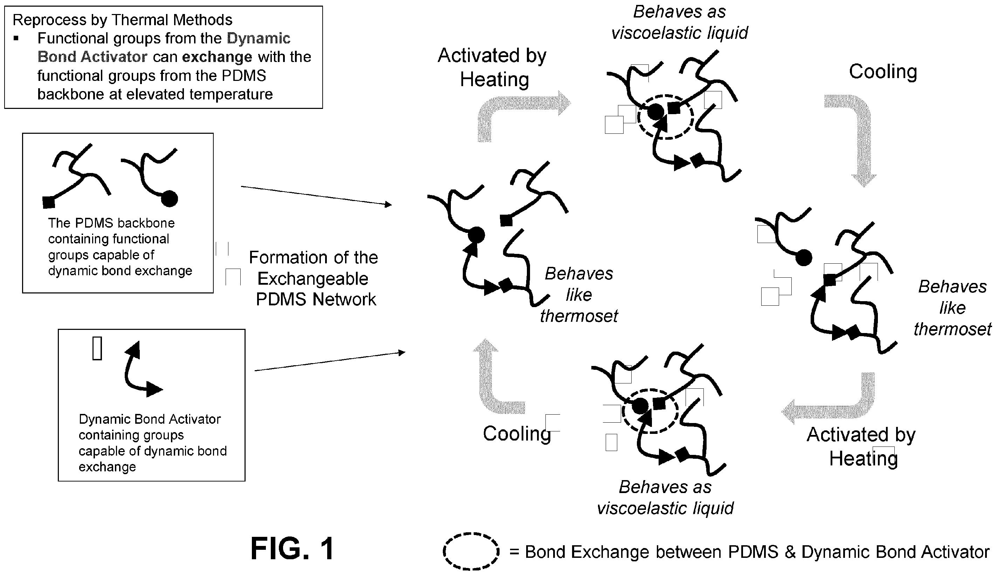

The present invention uses a dynamic activator to promote Si-O bonds between adjacent silicon-oxygen backbone chain elastomers of the polymer network. These bonds may be in the form of silyl ether groups which can be tailored to achieve specific properties or to optimize its reprocessing . The ability to reversibly break and reform crosslinks between adjacent Si-O backbone chain elastomers creates a polymer system that flows as a viscoelastic liquid at elevated temperatures, while at low temperatures the bond-exchange reactions are immeasurably slow, and thus the polymer system behaves as a thermosetting elastomer. This phenomenon is illustrated in FIG. 1. As a result, reprocessable polysiloxane-based polymers with reversible crosslinks are formed that permit the polymers to be processed and reshaped without significant loss in their inherent properties. As a result of the dynamic crosslinks formed between adjacent Si-O backbone chain elastomers, a three-dimensional crosslinked polymer network is formed having increased strength and resilience while being reformable under an external stimulus such as heat.

As used herein, the expression "dynamic bond activator" refers to any material that, when incorporated into a polymer network, can promote reversible connections or crosslinks between polymer chains that can break and reform in response to changes in temperature, pH, or the presence of specific chemicals. The dynamic bonds enable the polymer to exhibit self-healing properties, adaptability, and enhanced mechanical performance.

The types of dynamic bonds include reversible covalent bonds, as well as non-covalent interactions such as hydrogen bonds, ionic interactions, and metal-ligand coordinations.

The dynamic bond activator may be able to help the polymer repair itself after damage as well as allowing the polymer to adapt to environmental changes and mechanical stress. That is, after the activation event, the polymer regains its structural integrity and mechanical properties, often with minimal external intervention.

In the present invention, the dynamic bond activator is capable of promoting Si-O bonds between adjacent silicon-oxygen backbone chain elastomers of the polymer network. These bonds may be in the form of silyl ether groups which can be tailored to achieve specific properties or to optimize the polymer reprocessing . The ability to reversibly break and reform crosslinks between adjacent Si-O backbone chain elastomers creates a polymer system that flows as a viscoelastic liquid at elevated temperatures, while at low temperatures the bond-exchange reactions are immeasurably slow, and thus the polymer system behaves as a thermosetting elastomer. This phenomenon is illustrated in FIG. 1. As a result, reprocessable polysiloxane-based polymers with reversible crosslinks are formed that permit the polymers to be processed and reshaped without significant loss in their inherent properties.

In one aspect, the at least one dynamic bond activator may be an ionic salt. Examples of such ionic salts include ammonium salts or phosphonium salts. Amounts on the order of approximately 0.09 to 2.5 wt% may be used. An specific example of a dynamic bond activator is tetrabutylphosphonium hydroxide. When tetrabutylphosphonium hydroxide is used as the dynamic bond activator, the formed Si-O bonds exchanged between adjacent silicon-oxygen backbone chain elastomers are silyl ethers. Another specific example of a dynamic bond activator is potassium trimethylsilanolate. The silyl ether exchanges between different siloxane chains creates reversible crosslinks between different backbone polymer chains, forming a three-dimensional network. The resulting network structure provides the material with mechanical strength and stability.

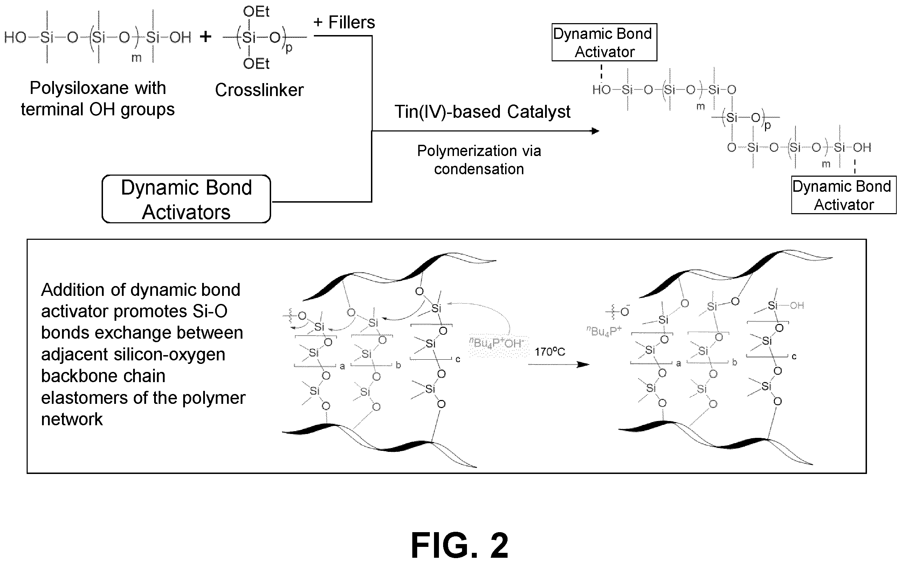

FIG. 2 illustrates the reactions involved in forming the polymer composition. Polysiloxanes with crosslinkers and fillers undergo a condensation reaction in the presence of a catalyst. The dynamic bond activator(s), in this case tetrabutylphosphonium hydroxide, triggers a silyl ether exchange between different siloxane chains. FIG. 2 illustrates the formation and breaking down of the bonds that create the three-dimensional network.

In bulk form, the polymer composition has properties of a thermosetting polymer at ambient conditions and is capable of reshaping as a viscoelastic liquid at a temperature of greater than approximately 170° C, while retaining a tensile strength of at least 60% of ambient tensile strength and at least 70% of ambient elongation at break.

The present invention further provides a method for preparing the polymer composition in which a first silicon-oxygen backbone chain elastomer is combined with filler and crosslinker to form a first mixture. A second silicon-oxygen backbone chain elastomer is combined with filler and catalyst to form a second mixture. The first mixture and the second mixture are combined to form a third mixture, wherein the first mixture and the second mixture are combine in a weight ratio of 1.1: 1 to 8.3:1. The third mixture is combined with at least one dynamic bond activator to form a fourth mixture which is cured to form the polymer composition. Solvent can be removed through an optional heating step in vacuum at a temperature of 50 to 80°C.

### EXAMPLES:

Various compositions were prepared and tested, including comparative compositions. The ingredients and their properties are set forth below, followed by the method of preparing the composition. Finally, a summary of the experiments, the ingredients, and properties of the prepared compositions are given in Tables 1-6.

### Silanol-terminated PDMS

Polydimethylsiloxanes (PDMS) with terminal silanol (SiOH) groups were used for forming the Si-O backbone chain elastomeric component for forming the polymer network via condensation of the terminal silanol groups.

**Table 1: Silanol-terminated PDMS**

| Silanol-terminated PDMS | Molecular Weight | Viscosity (cSt) |
|---|---|---|
| DMS-S33 | 43,500 | 3,500 |
| DMS-S45 | 110,000 | 50,000 |
| DMS-S51 | 139,000 | 90,000 to 150,000 |

### Fillers

Fillers enhance the mechanical strength of the polymer composition, including tensile strength, elongation at break and tear strength. The fillers include fumed silica, and zinc oxide. Hexamethyldisilazane treated silica is used as filler in contrast to untreated silica in the Examples, as this treatment replaces the OH groups on the surface of the silica, resulting in increased hydrophobicity, and to promote good anti-settling of the filler without unwanted increase in viscosity in the silicone formulation during the fabrication process.

### Crosslinkers

Crosslinkers help to form the polymer network together with the silanol terminated PDMS. Silanes with ethoxy or methoxy groups are selected to undergo condensation with silanol-terminated PDMS. The ethoxy or methoxy groups are eliminated during the condensation reaction as ethanol or methanol in the presence of silanol terminated PDMS. Poly(diethoxysiloxane) (comprising 40 to 42% SiO₂, abbreviated as PSI-021) and/or 1,2-bis (triethoxysilyl)ethane is/are used in the Examples.

### Trimethylsilyl-terminated PDMS

Polydimethylsiloxanes (PDMS) with terminal trimethylsilyl group are the additives for viscosity adjustment, and these trimethylsilyl-terminated PDMS chains can penetrate into the condensed and crosslinked PDMS network to provide flexibility of the resulting material.

**Table 2: Trimethylsilyl terminated PDMS**

| Trimethylsilyl terminated PDMS | Molecular Weight | Viscosity (cSt) |
|---|---|---|
| DMS-T21 | 5,970 | 100 |
| DMS-T31 | 28,000 | 1,000 |
| DMS-T46 | 116,500 | 60,000 |

### Catalyst

Dibutyltin dilaurate was used for condensation system involving silanol-terminated PDMS and its crosslinkers.

### Dynamic Bond Activators

Ionic salts such as ammonium salts or phosphonium salt are selected to enable reprocessability. In these examples, tetrabutylphosphonium hydroxide (40%), was used.

### Fabrication Procedure

A planetary centrifugal mixer is usually used for mixing the compositions of the Examples. To the silanol-terminated PDMS the crosslinker was added and mixed for 20 seconds at 2000 rpm, followed by addition of hexamethyldisilazane treated fumed silica using at 2 minutes, 2000 rpm to form a first mixture.

To the trimethylsilyl-terminated PDMS, dibutyltin dilaurate was added and mixed for 20 seconds at 2000 rpm, followed by mixing hexamethyldisilazane treated fumed silica at 2 minutes, 2000 rpm to form a second mixture.

Adding the second mixture into first mixture in the weight ratio indicated in Tables 3-6 (5 min, 2000 rpm) to form a third mixture

The dynamic bond activators were added to the third mixture and mixed (5 min, 2000 rpm) to form a fourth mixture

The fourth mixture was poured into a mold and then placed inside a temperature and humidity controlled chamber (25 degrees Celsius, 95% RH).

The resulting cured polymer was placed in a vacuum oven at 60°C for 4 h as optional post-cure step.

### Mechanical Properties

Samples are cut into a standard test specimen size (in dumbbell shape) according to ASTM international standards.

### Reprocessability

Samples are reprocessed under molding conditions at 170°C for 6 h. The reprocessed silicone is cut into standard test specimen size for measurement of mechanical properties.

Tables 3, 4, 5 and 6 depict various compositions formed by the Examples and their measured mechanical properties.

It is well established that mechanical properties of silicone rubber is dependent on viscosity and overall solid content in the composition. Viscosity and the overall solid content can be optimized by tuning the ratio of the amounts of components in the first mixture against the second mixture. Various compositions are formed in Examples 1 to 4 with tensile strength ranging from 1.17 to 5 MPa as shown in Table 3. These compositions having Shore A hardness ranging from 20 to 50 units. Comparing Example 1 to 4 against Example 5, an increase the amount of hexamethyldisilazane treated fumed silica in the compositions resulted in an increase in overall solid content of the composition and an increase in tensile strength from 4.21 MPa to 5 MPa, to 6.03 MPa .

It is expected that silanol-terminated PDMS with high molecular weight, such as those of DMS-S51 in Table 4, will have more polymer chain entanglement; while silanol-terminated PDMS with low molecular weight, such as those of DMS-S33, will have the higher crosslinking density and high density. Compositions comprising DMS-S51 shall have high elongation at break in the form of a flexible rubber according to common knowledge in the field. Comparing Example 1 in Table 3 and Example 6 in Table 4, however, this is not the case (Elongation at break at 1178% in Example 1 against 570% in Example 6). Referring to Examples 7, 8, 9, 10 in Table 5 using a low molecular weight silanol-terminated PDMS (DMS-S33), elongation at break can be tuned by adding suitable amount of trimethylsilyl-terminated PDMS and crosslinkers, poly(diethoxysiloxane) (comprising 40 to 42% SiO₂, abbreviated as PSI-021) and 1,2-bis(trioethoxysilyl)ethane. Trimethylsilyl-terminated PDMS chains can penetrate into the condensed and crosslinked PDMS network to provide flexibility of the resulting material. Comparing Example 7 and 8 in Table 5, and Examples 13 and 14 in Table 6 the use of 1,2,-bis(trioethoxysilyl)ethane as a crosslinker resulted in reduction of elongation at break from 357% to 69.1%; Comparing Example 7 and 10, the use of trimethylsilyl-terminated PDMS in Table 2 with low molecular weight (DMS-T21) over higher molecular weight (DMS-T31) resulted in reduction of elongation at break from 357% to 170%.

Referring to Comparative Examples 16 and 17 with the first mixture and the second mixture are combine in a weight ratio of 24:1, these compositions lack properties in reshaping as a viscoelastic liquid at a temperature of greater than approximately 170°C.

Examples 5 in Table 3, 6 in Table 4, 8 and 9 in Table 5, and Examples 14 and 15 in Table 6 have properties of a thermosetting polymer at ambient condition and is capable of reshaping as a viscoelastic liquid at a temperature of greater than approximately 170°C, while retaining a tensile strength of no greater than 60% of ambient tensile strength and no greater than 70% of ambient elongation at break.

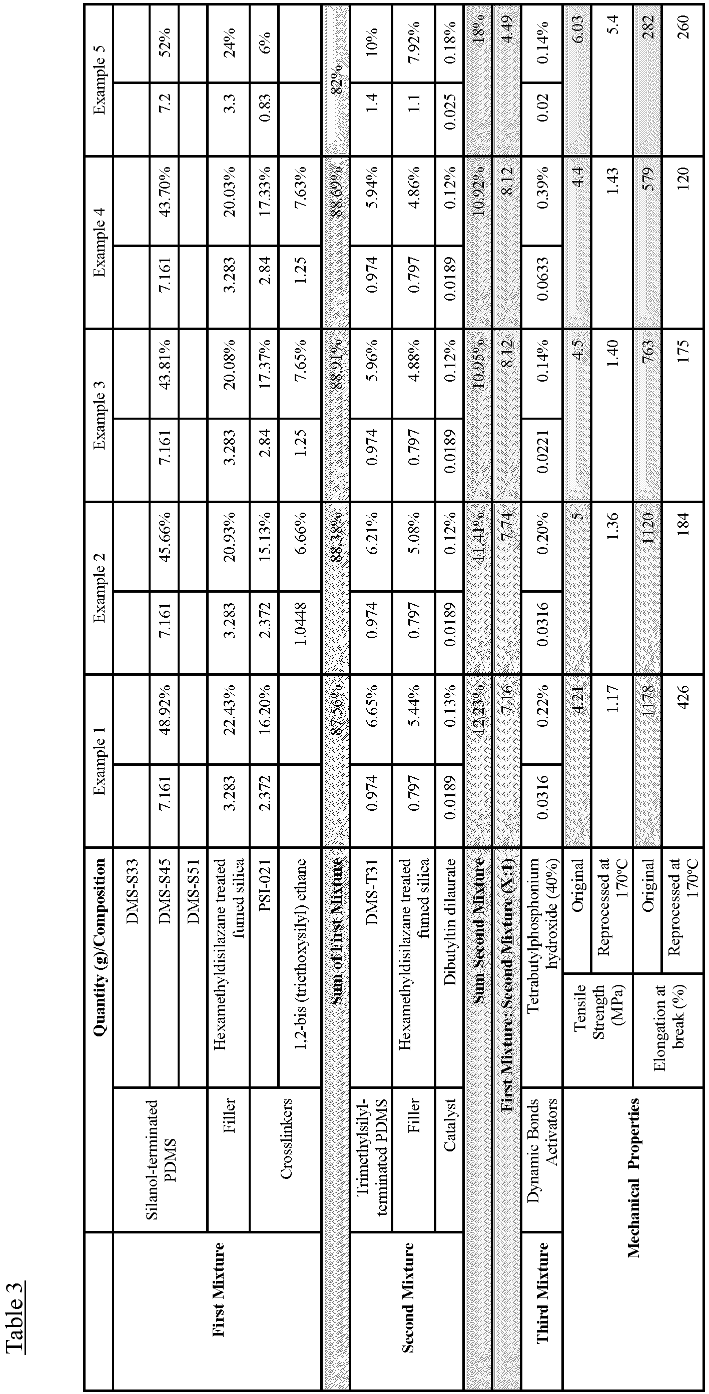

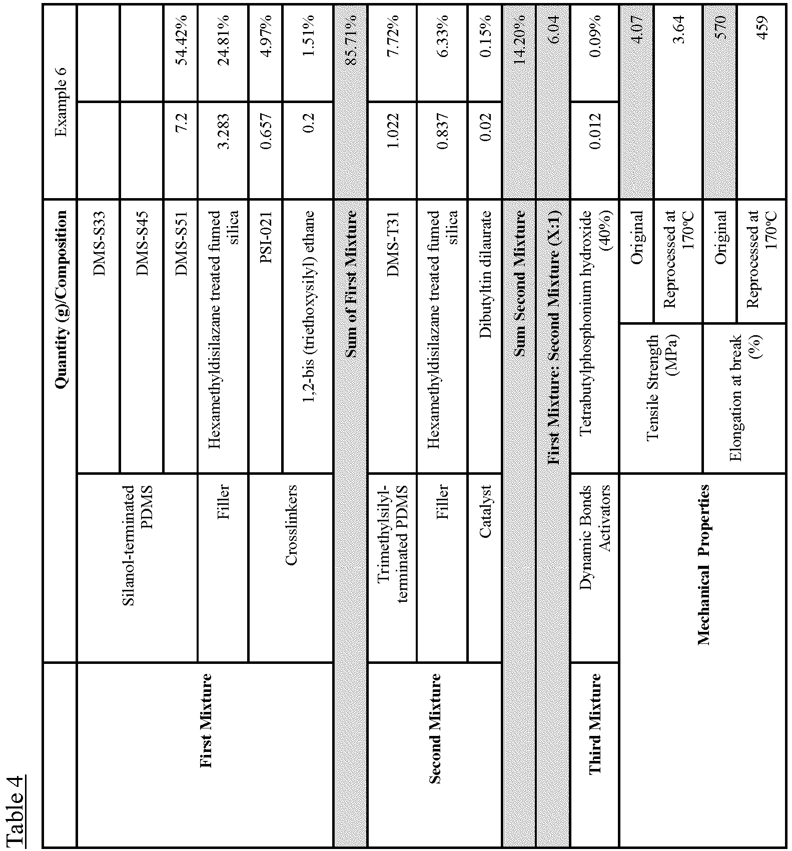

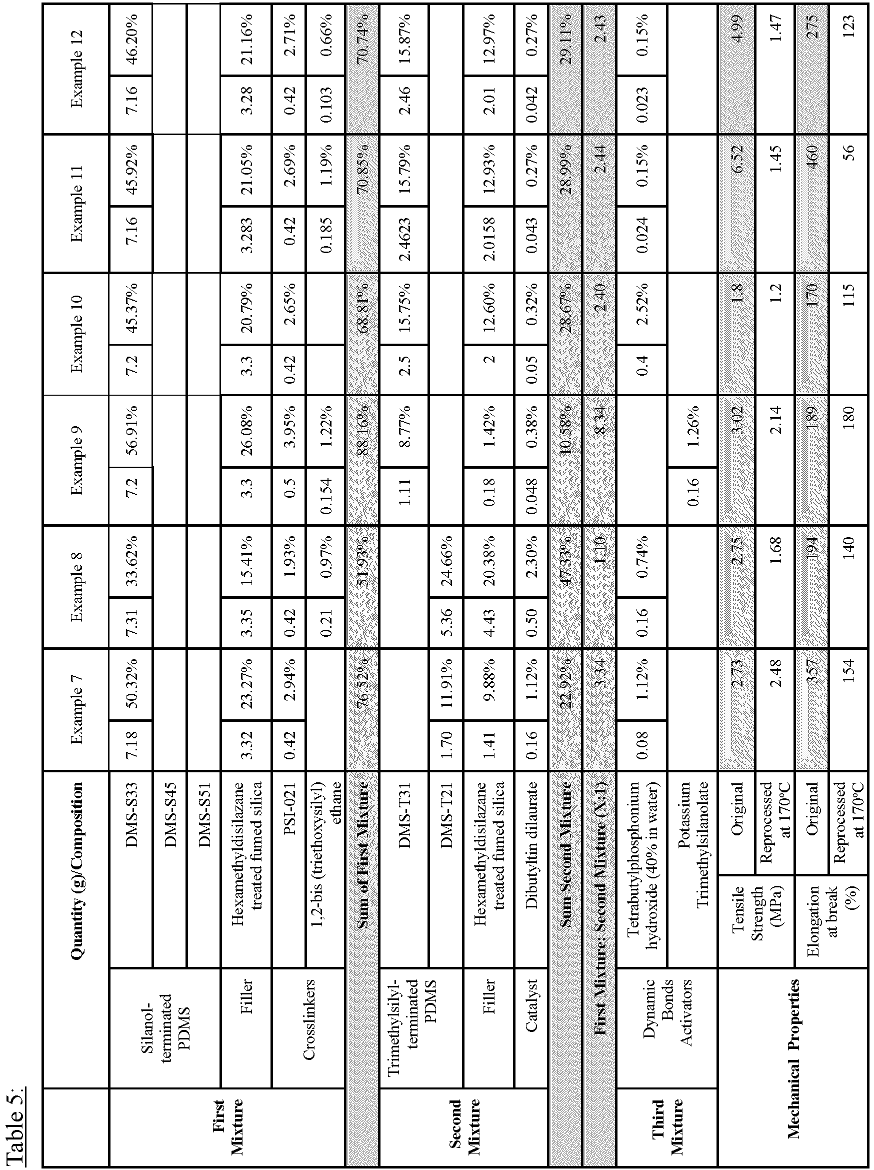

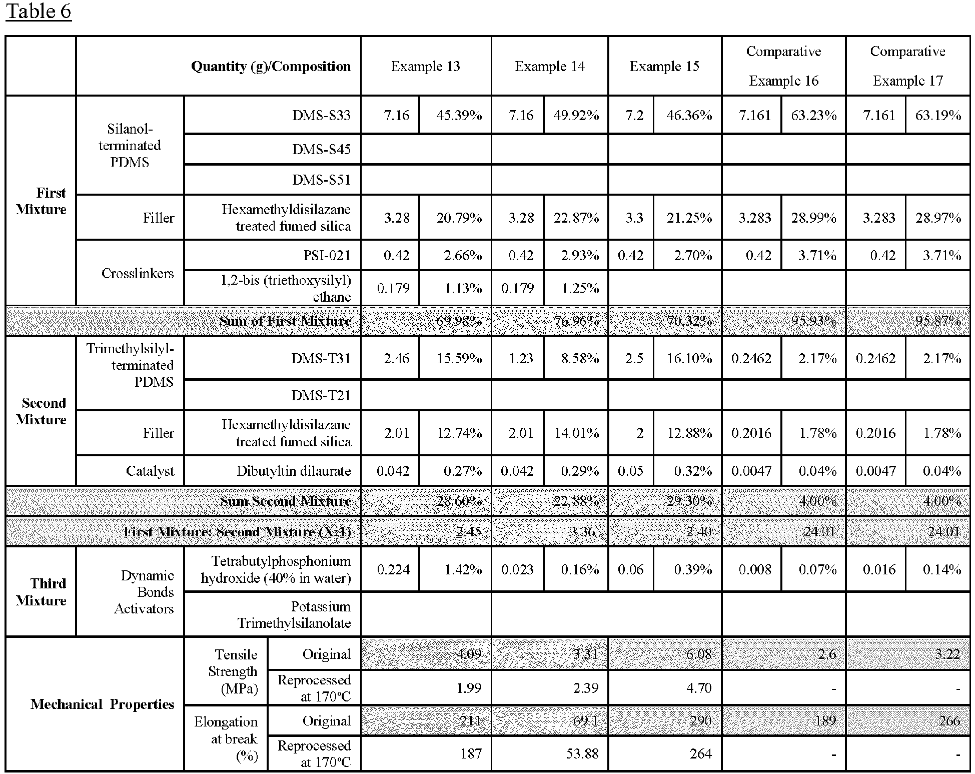

### Industrial Applicability

Through the use of the dynamic bond activators promoting Si-O exchanges between adjacent silicon-oxygen backbone chains, the polymers of the present invention can be reformed and reshaped when subjected to heat. However, at ambient conditions, the polymer exhibits properties typical of thermosetting materials. It has a stable, cross-linked structure that maintains its shape and mechanical properties. In one aspect, when heated to temperatures above approximately 170°C, the dynamic bond activator facilitates the exchange of Si-O bonds. This process allows the polymer to behave like a viscoelastic liquid, enabling reshaping and reprocessing. Importantly, this reshaping process does not significantly degrade the material's properties. Instead, at least some of the polymer compositions retain at least 60% of its tensile strength and 70% of its elongation at break compared to its ambient properties after being reshaped. This retention of mechanical properties ensures that the material remains functional and reliable after thermal processing. Consequently, the polymer may be used in numerous applications requiring recyclability and reprocessability. These applications include reusable molds and seals, including creating molds and seals that may need to be periodically reformed. The present materials are food-contact safe and may be used for silicone food storage containers. The polymers may be used in self-healing materials and flexible electronics. Medical devices may also be made from the polymers as they are biocompatible and can be sterilized or reshaped.

The foregoing description of the present invention has been provided for the purposes of illustration and description. It is not intended to be exhaustive or to limit the invention to the precise forms disclosed. Many modifications and variations will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated.

As used herein and not otherwise defined, the terms "substantially," "substantial," "approximately" and "about" are used to describe and account for small variations. When used in conjunction with an event or circumstance, the terms can encompass instances in which the event or circumstance occurs precisely as well as instances in which the event or circumstance occurs to a close approximation. For example, when used in conjunction with a numerical value, the terms can encompass a range of variation of less than or equal to ±10% of that numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%.

As used herein, the singular terms "a," "an," and "the" may include plural referents unless the context clearly dictates otherwise. In the description of some embodiments, a component provided "on" or "over" another component can encompass cases where the former component is directly on (e.g., in physical contact with) the latter component, as well as cases where one or more intervening components are located between the former component and the latter component.

While the present disclosure has been described and illustrated with reference to specific embodiments thereof, these descriptions and illustrations are not limiting. It should be understood by those skilled in the art that various changes may be made and equivalents may be substituted without departing from the true spirit and scope of the present disclosure as defined by the appended claims. The illustrations may not necessarily be drawn to scale. There may be distinctions between the artistic renditions in the present disclosure and the actual apparatus due to manufacturing processes and tolerances. There may be other embodiments of the present disclosure which are not specifically illustrated. The specification and the drawings are to be regarded as illustrative rather than restrictive. Modifications may be made to adapt a particular situation, material, composition of matter, method, or process to the objective, spirit, and scope of the present disclosure. All such modifications are intended to be within the scope of the claims appended hereto. While the methods disclosed herein have been described with reference to particular operations performed in a particular order, it will be understood that these operations may be combined, sub-divided, or re-ordered to form an equivalent method without departing from the teachings of the present disclosure. Accordingly, unless specifically indicated herein, the order and grouping of the operations are not limitations.

## Claims

1. A polymer composition having covalent bonding networks alterable by thermally-activated bond exchanges creating dynamic crosslinks comprising:
a silicon-oxygen backbone chain elastomer for creating a polymer network;
a non-agglomerating filler dispersed within and bonded to the polymer network;
a catalyst for facilitating a condensation reaction;
a crosslinker selected from one or more silanes that include one or more methoxy or ethoxy groups;
at least one dynamic bond activator promoting Si-O bond exchange between adjacent silicon-oxygen backbone chain elastomers of the polymer network such that dynamic crosslinks formed between the adjacent silicon-oxygen backbone chain elastomers create a three-dimensional crosslinked polymer network;
wherein, in bulk form, the polymer composition has properties of a thermosetting polymer at ambient condition and is capable of reshaping as a viscoelastic liquid at a temperature of greater than approximately 170° C.

2. The polymer composition of claim 1, wherein the silicon-oxygen backbone chain elastomer is selected from one or more of a trimethylsilyl-terminated polydimethyl siloxane and a silanol-terminated polydimethyl siloxane.

3. The polymer composition of claim 2, wherein the silicon-oxygen backbone chain elastomer has a molecular weight of 5,970 to 139,000 g/mol and a viscosity of 100 to 150,000 cSt and is present in the composition in an amount from 49.6 to 65.6 wt%.

4. The polymer composition of claim 2, wherein the filler comprises hexamethyldisilazane treated silica in an amount of 24.9 to 36.9 wt%.

5. The polymer composition of claim 1, wherein the at least one dynamic bond activator is an ionic salt selected from an ammonium salt or a phosphonium salt in an amount of 0.09 to 2.5 wt%.

6. The polymer composition of claim 5, where the at least one dynamic bond activator is tetrabutylphosphonium hydroxide.

7. The polymer composition of claim 1, wherein the at least one catalyst comprises dibutyltin dilaurate or dibutyltin dioctoate in an amount of 0.12 to 2.3 wt%.

8. The polymer composition of claim 1, wherein the crosslinker comprises silanes with ethoxy groups and silanes with methoxy groups, in an amount of 2.7 to 25.0 wt%.

9. The polymer composition of claim 8, wherein the crosslinker is selected from one or more of 1,2-bis (triethoxysilyl) ethane, poly(dimethoxysiloxane), poly(diethoxysiloxane), and tetraethyl silicate.

10. The polymer composition of claim 1, wherein the reshaped polymer composition retains a tensile strength of at least 60% of ambient tensile strength and at least 70% of ambient elongation at break.

11. A method for preparing the polymer composition of claim 1, comprising:
combining a first silicon-oxygen backbone chain elastomer with filler and the crosslinker to form a first mixture;
combining a second silicon-oxygen backbone chain elastomer with filler and the catalyst to form a second mixture;
combining the first mixture and the second mixture to form a third mixture, wherein the first mixture and the second mixture are combine in a weight ratio of 1.1:1 to 8.3:1;
combining the third mixture with at least one dynamic bond activator to form a fourth mixture; and
curing the fourth mixture to form the polymer composition.

12. The method of claim 11, further comprising heating the polymer composition in vacuum at a temperature of 50 to 80°C.
